# EUROPÄISCHE PATENTSCHRIFT

(11) **EP 2 078 574 B1**
(45) Veröffentlichungstag und Bekanntmachung des Hinweises auf die Patenterteilung: **09.03.2011**
(21) Anmeldenummer: 08021651.8
(22) Anmeldetag: 12.12.2008
(51) Int. Cl.: B23C 5/10

(54) **Schruppfräser mit abgeschrägter Schneidkante**
Roughing mill with inclined cutting edge
Fraise finisseuse dotée d'un bord tranchant incliné

(30) Priorität: 09.01.2008 DE 202008000350 U
(43) Veröffentlichungstag der Anmeldung: 15.07.2009
(73) Patentinhaber: Hofmann & Vratny OHG, 85617 Assling (DE)
(72) Erfinder: Vratny, Zdenek, 85617 Assling (DE)
(74) Vertreter: Czybulka, Uwe

(56) Entgegenhaltungen:
- EP-A- 1 777 027
- JP-A- 4 217 415

## Beschreibung

Die Erfindung bezieht sich auf einen Schruppfräser mit abgeschrägter Schneidkante gemäß dem Oberbegriff des Anspruchs 1.

Ein solcher Schruppfräser weist einen zylindrischen Werkzeugschaft auf, der an seinem einen, oberen Ende in eine Fräsmaschine einspannbar ist. Von seinem unteren Ende erstreckt sich in Richtung auf das obere Ende des Werkzeugschafts ein Fräsbereich, der zumindest eine, üblicherweise etwa vier, im Umfang des Fräsers gelegene und in einem Schraubengang verlaufende Fräsflächen aufweist. Diese Fräsflächen sind mit einer in Längsrichtung des Schraubenganges wellenförmig verlaufenden Schruppverzahnung mit einer Schneidkante versehen, wobei die Schneidkante über ihre gesamte Länge und im Wesentlichen über die gesamte Höhe der wellenförmigen Schruppverzahnung abgeschrägt ist.

Ein solcher, von der Anmelderin hergestellter Schruppfräser wird von der Firma Hoffmann Group seit August 1995 als VHM-Schruppfräser HPC vertrieben. Dieser bekannte Schruppfräser weist vier beziehungsweise fünf in einem Schraubengang verlaufende Fräsflächen auf; vgl. den Katalog der Firma Hoffmann Group 2005/2006, Seite 244.

In der EP 1 777 027 ist ebenfalls ein solcher Schruppfräser beschrieben, der im Bereich der Schneidkante mit einer Fase versehen ist, wobei die Fase sich mindestens über die gesamte Höhe der Wellenberge der wellenlinienförmigen Schruppverzahnung erstreckt. Die Fase wird, wie bei dem oben genannten Schruppfräser durch einen einzigen Flachschleifvorgang entlang der Schneidkante hergestellt. An diese abgeschrägte Schneidkante schließt sich, in Vorlaufrichtung des Fräsers eine Spanrille an, in die beim Fräsen eines Werkstückes die abgefrästen Späne eintauchen und in Richtung auf das obere Ende des Schruppfräsers abgeführt werden.

Der Vorteil einer solchen abgeschrägten Schneidkante liegt unter anderem darin, dass die Schneidkante stabilisiert wird, und insbesondere in dem Bereich der Wellenberge der Schneidkante Ausbrechungen der Schneidkante beim Fräsen vermieden werden.

Beim Fräsen eines Werkstücks werden die Späne im Wesentlichen in einem rechten Winkel zur Schneidkante abgegeben und in die Spanrille transportiert. Die Späne treten dann in dieser Richtung auf die der Schneidkante gegenüber liegende Wand der Spanrille auf, wo sie dann abrupt umgelenkt werden müssen, um in der Spanrille nach oben in Richtung auf das Einspannende abgeführt zu werden.

Durch eine solche Ableitung der Späne kann es in den Spanrillen des Schruppfräsers durchaus zu sogenannten Spanklemmern führen, sodass die abgefrästen Späne nicht glatt abgeführt werden und die Spanrille sozusagen verstopft.

Der Erfindung liegt die Aufgabe zugrunde, einen Schruppfräser mit einer durch den abgeschrägten Bereich stabilen Schneidkante anzugeben, bei dem die Spanabfuhr der abgefrästen Späne verbessert wird, sodass praktisch keine Spanklemmer auftreten.

Diese Aufgabe ist gemäß der Erfindung durch die Merkmale des Anspruchs 1 gelöst.

Demgemäß ist der abgeschrägte Bereich der Schneidkante in deren Längsrichtung mit einem Wellenschliff aus abwechselnd Bergen und Tälern versehen.

Durch einen solchen Wellenschliff wird die Schneidkante der Fräsfläche, in Längsrichtung des Schruppfräsers gesehen, in einem Wellental zurückgesetzt und in einem Wellenberg nach vorne versetzt. Sobald ein Span des zu fräsenden Werkstückes den Wellenschliff nach einem Wellenberg verlässt, wird der Span in die Spanrille nach unten, d. h. in Richtung auf die Stirnseite des Schruppfräsers, gelenkt und dann in einem zügigen glatten Umlenkvorgang in Richtung nach oben abgeführt. Auf diese Weise können Spanklemmer praktisch vollständig vermieden werden. Eine Verstopfung der Spanrille wird durch diese Ausgestaltung des Schruppfräsers verhindert.

Gleichzeitig wird der Vorteil beibehalten, dass durch die Abschrägung der Schneidkante diese verstärkt und stabilisiert wird, sodass Ausbrechungen der Schneidkante vermieden werden.

Gemäß einer bevorzugten Ausführungsform der Erfindung ist die Periode des Wellenschliffs, d. h. der Abstand zwischen zwei aufeinander folgenden Wellenbergen, konstant. Es ist jedoch durchaus möglich, die Periode des Wellenschliffs zu variieren, zum Beispiel indem die Periode des Wellenschliffs von der Stirnseite des Fräsers beginnend sukzessive in Richtung auf das obere Einspannende des Schruppfräsers verringert wird.

Gemäß einer bevorzugten Ausführungsform der Erfindung überdeckt die Periode des Wellenschliffs mehrere Perioden der wellenförmigen Schruppverzahnung, z. B. drei bis vier Perioden. Eine exakte geometrische Zuordnung der Perioden des Wellenschliffs und der Schruppverzahnung ist nicht notwendig.

Wenn der Schruppfräser ein Fräser mit mehreren jeweils in einem Schraubengang verlaufenden Fräsflächen ist, so liegen gemäß einer bevorzugten Ausführungsform der Erfindung die Wellenberge und Wellentäler des Wellenschliffs, in Längsrichtung des Schruppfräsers, in einer gemeinsamen Mantellinie des Schruppfräsers.

Alternativ hierzu können die Wellenberge und Wellentäler des Wellenschliffs benachbarter Fräsflächen, wiederum in Längsrichtung des Schruppfräsers gesehen, jeweils um einen Teil der Periode des Wellenschliffs in Umfangrichtung des Werkzeugschafts gegeneinander versetzt werden. Vorzugsweise entspricht dieser Versatz der Periode des Wellenschliffs geteilt durch die Anzahl der Fräsflächen. Wenn der Schruppfräser somit vier in Schraubengängen verlaufende Fräsflächen aufweist, so beträgt dieser Versatz jeweils ein Viertel der Periode des Wellenschliffs.

Bevorzugt verläuft dieser Versatz der Periode des Wellenschliffs aufeinander folgender Fräsflächen in einer Richtung.

Die Erfindung ist in Ausführungsbeispielen anhand der Zeichnung näher erläutert. In dieser stellen dar:
Figur 1 eine Ansicht eines Schruppfräsers gemäß der Erfindung mit vier schraubenförmig verlaufenden Fräsflächen, wobei die Schneidkanten dieser Fräsflächen jeweils durch einen Wellenschliff abgeschrägt sind;
Figur 2 einen Teilquerschnitt durch den Schruppfräser gemäß Figur 1 längs II-II im Bereich der durch den Wellenschliff abgeschrägten Schneidkante;
Figur 3 schematisch eine Abwicklung eines Teiles des Schruppfräsers im Bereich der Schneidkanten zweier benachbarter Fräsflächen, wobei die Berge und Täler des Wellenschliffs bei beiden Schneidkanten jeweils in einer gemeinsamen Mantellinie des Schruppfräsers gelegen sind; und
Figur 4 eine Abwicklung eines Teiles eines Schruppfräsers im Bereich dreier Fräsflächen, bei denen die Periode des Wellenschliffs jeweils um einen Teil der Periode des Wellenschliffs, in diesem Falle einer Viertelperiode, versetzt ist.

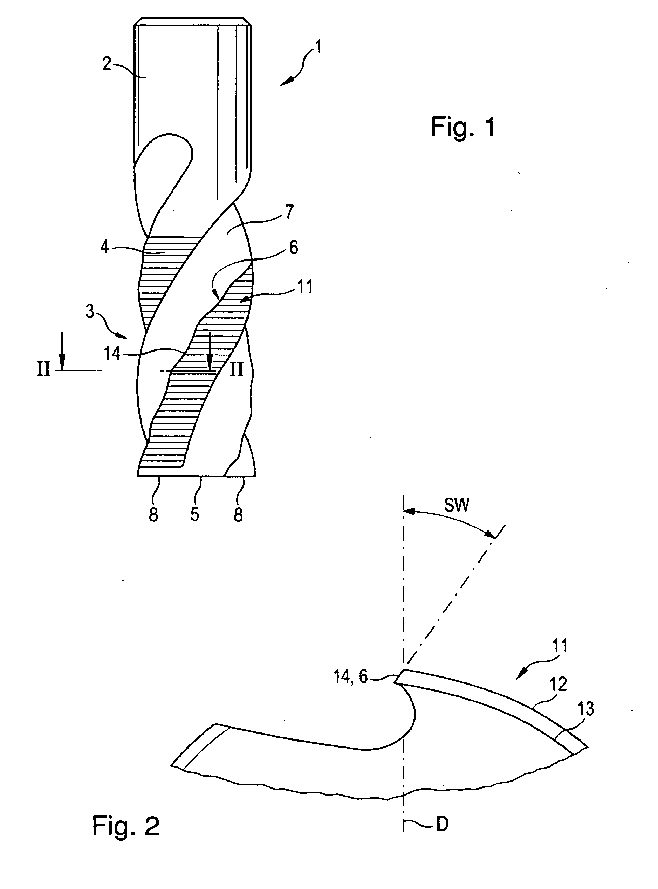

Ein Schruppfräser 1 weist einen zylindrischen Werkzeugschaft 2 auf, der mit seinem in Figur 1 oberen Ende in eine hier nicht gezeigte Fräsmaschine eingespannt wird. Der sich an den glatten zylindrischen Werkzeugschaft 2 anschließende Bereich des Schruppfräsers 1 ist als Fräsbereich 3 ausgebildet, in diesem Falle mit vier jeweils winkelmäßig längs des Umfanges des Fräsers um 90° versetzten Fräsflächen 4, die im Umfang des Fräsers 1 gelegen sind und sich bandförmig von einer dem Einspannende des Werkzeugschafts 2 gegenüber liegenden Stirnseite 5 jeweils in einem Schraubengang in Richtung auf das obere Ende des Fräsbereichs 3 erstrecken. Die Fräsflächen 4 weisen jeweils eine Schneidkante 6 auf. Zwischen benachbarten Fräsflächen 4 sind jeweils nutenförmige Spanrillen 7 gelegen, über die die beim Fräsen anfallenden Späne abgeführt werden.

Die Fräsflächen 4 enden in der Stirnseite 5 des Fräsers 1 jeweils in einer Schneide 8.

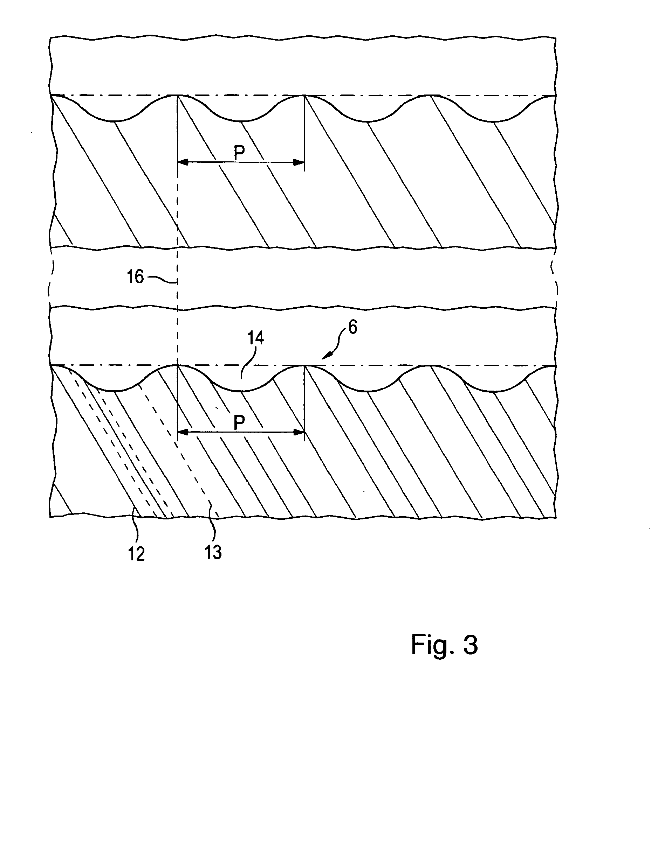

Jede Fräsfläche 4 ist mit einer wellenförmigen Schruppverzahnung 11 versehen, die aufeinander folgende Wellenberge 12 und Wellentäler 13 aufweist. In Figur 3 sind die Kämme der Wellenberge 12 als durchgehende Linien, die Grundlinien der Wellentäler 13 als gestrichelte Linien dargestellt. Die Kämme der Wellenberge und die Grundlinien der Wellentäler laufen bei einem vertikal gestellten Schruppfräser etwa horizontal, wie in Figur 1 schematisch dargestellt.

Die Schneidkante 6 der Schruppverzahnung 11 ist, wie schematisch in Figur 2 dargestellt, mit einem positiven Spanwinkel SW gegenüber einer Durchmesserlinie D des Schruppfräsers abgeschrägt.

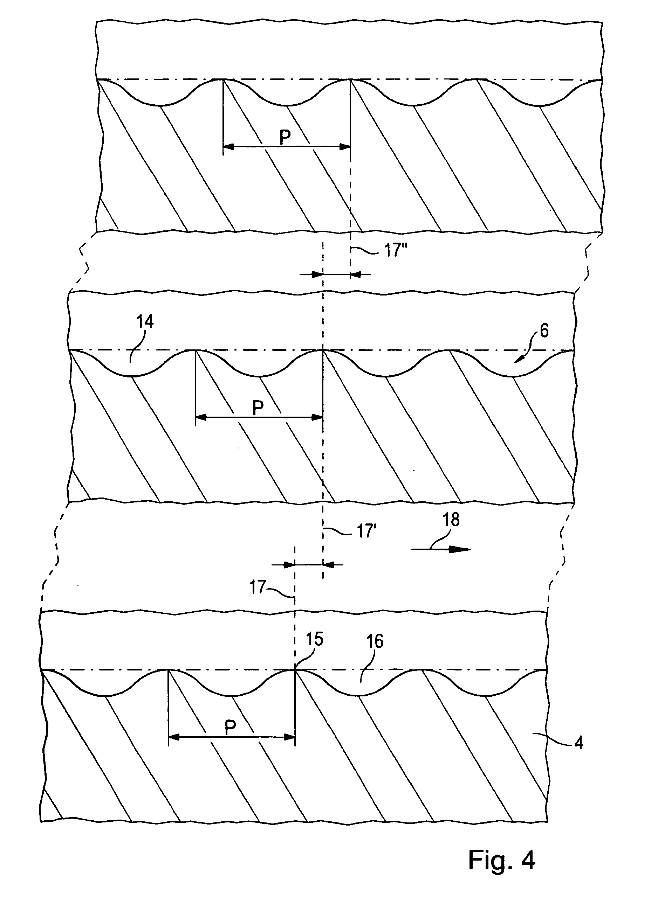

Dieser abgeschrägte Bereich ist in den Figuren mit 14 bezeichnet. Der abgeschrägte Bereich 14 der Schneidkante 6 ist in deren Längsrichtung als Wellenschliff aus abwechselnd Bergen 15 und Tälern 16 ausgebildet; vgl. hierzu die schematischen Abwicklungen in den Figuren 3 und 4. Dieser Wellenschliff hat eine Periode P wie in den Figuren 3 und 4 angedeutet. Diese Periode P ist deutlich größer als die Periode der Schruppverzahnung, üblicherweise drei- bis sechsmal so groß, sodass die Periode des Wellenschliffs 14 stets mehrere Perioden der wellenförmigen Schruppverzahnung 11 überdeckt. Durch den Wellenschliff der Schneidkante wird, wie am besten aus den Figuren 3 und 4 hervorgeht, die Schneidkante 6 des Schruppfräsers periodisch vor- beziehungsweise zurückversetzt. Durch diesen Wellenschliff entsteht eine ähnliche Funktion wie bei einer ungleich geteilten Schneide. Gleichzeitig ist die Schneide sehr stabil, sodass keine Ausbrechungen erfolgen.

Durch diesen Wellenschliff werden die abgefrästen Späne erst nach unten in die Spanrillen 7 geführt, wonach der Span glatt umgelenkt und dann nach oben abgeführt wird.

In Figur 3 sind schematisch die Abwicklungen zweier benachbarter Schraubengänge eines Schruppfräsers schematisch dargestellt, der mehrere Fräsflächen, zum Beispiel vier Fräsflächen aufweist. Die Kämme der Wellenberge 12 der Wellenschliffe der einzelnen Schraubengänge liegen hierbei exakt jeweils auf einer gemeinsamen Mantellinie des Schruppfräsers. Die gemeinsame Mantellinie ist schematisch strichpunktiert angedeutet und mit dem Bezugszeichen 17 versehen.

Gemäß einer anderen Ausführungsform, die schematisch in Figur 4 gezeigt ist, sind die Perioden der Wellenschliffe benachbarter Schraubengänge jeweils um ein n-tel der Periode P des Wellenschliffes versetzt, und zwar bevorzugt in einer Richtung, wie dieses durch den Pfeil 18 angedeutet ist. Wenn somit ein Schruppfräser 4 Fräsflächen aufweist, sind die Perioden der Wellenschliffe benachbarter Schraubengänge jeweils um eine Viertelperiode gegeneinander versetzt. Die Mantellinie 17 des Wellenberges 15 des ersten Schraubenganges ist somit um ein n-tel, d. h. ein Viertel der Periode des Wellenschliffs gegenüber der Mantellinie 17' versetzt, die durch den Wellenberg des zweiten Schraubenganges hindurchgeht; ebenso ist die Mantellinie 17", die durch den Wellenberg des dritten Schraubenganges geht, um eine Viertelperiode gegenüber der Mantellinie 17' versetzt usw.

Modifikationen und Abänderungen der beschriebenen Erfindung sind für einen Fachmann natürlich möglich; die Erfindung wird jedoch durch die anhängenden Ansprüche definiert.

## Patentansprüche

1. Schruppfräser (1) mit einem zylindrischen Werkzeugschaft (2), der an einem, oberen Ende in eine Fräsmaschine einspannbar ist und einen sich von seinem anderen, unteren Ende ausgehenden und sich in Richtung auf das obere Ende des Werkzeugschafts erstreckenden Fräsbereich (3) aufweist, der zumindest eine im Umfang des Schruppfräsers gelegene und in einem Schraubengang verlaufende Fräsfläche (4) aufweist, die mit einer in Längsrichtung des Schraubenganges wellenförmig verlaufenden Schruppverzahnung mit einer Schneidkante (6) versehen ist, wobei die Schneidkante (6) über ihre gesamte Länge und im Wesentlichen über die gesamte Höhe der wellenförmigen Schruppverzahnung abgeschrägt ist, **dadurch gekennzeichnet, dass** der abgeschrägte Bereich (14) der Schneidkante (6) in deren Längsrichtung mit einem Wellenschliff aus abwechselnd Bergen (15) und Tälern (16) versehen ist.

2. Schruppfräser nach Anspruch 1, **dadurch gekennzeichnet, dass** die Periode (P) des Wellenschliffs, d. h. der Abstand zwischen zwei aufeinander folgenden Wellenbergen (15) konstant ist.

3. Schruppfräser nach Anspruch 2, **dadurch gekennzeichnet, dass** bei einem Schruppfräser (1) mit mehreren (n) jeweils in einem Schraubengang verlaufenden Fräsflächen (4) die Wellenberge (15) und Wellentäler (16) des Wellenschliffs, in Längsrichtung des Schruppfräsers gesehen, in ein und derselben Mantellinie (17) des Werkzeugschafts (2) gelegen sind.

4. Schruppfräser nach Anspruch 2, **dadurch gekennzeichnet, dass** bei einem Schruppfräser (1) mit mehreren (n) jeweils in einem Schraubengang verlaufenden Fräsflächen (4) die Wellenberge (15) und Wellentäler (16) der Wellenschliffs benachbarter Fräsflächen (4), in Längsrichtung des Schruppfräsers gesehen, jeweils um ein n-tel der Periode (P) des Wellenschliffs in Umfangsrichtung des Werkzeugschafts (2) gegeneinander versetzt sind.

5. Schruppfräser nach Anspruch 4, **dadurch gekennzeichnet, dass** der Versatz der Periode (P) des Wellenschliffs aufeinander folgender Fräsflächen um jeweils ein n-tel der Periode in einer Richtung (18) erfolgt.

6. Schruppfräser nach einem der vorhergehenden Ansprüche, **dadurch gekennzeichnet, dass** die Periode (P) des Wellenschliffs größer als die Periode der wellenförmigen Schruppverzahnung (11) ist.

7. Schruppfräser nach Anspruch 6, **dadurch gekennzeichnet, dass** die Periode (P) des Wellenschliffs mindestens das Dreifache der Periode der Schruppverzahnung beträgt.

8. Schruppfräser nach einem der vorhergehenden Ansprüche, **dadurch gekennzeichnet, dass** der abgeschrägte Bereich (14) der Schneidkante (6) eine Breite im Bereich etwa eines Hundertstels bzw. einiger Hundertstel des Durchmessers des Schruppfräsers aufweist.

## Claims

1. A roughing milling cutter (1) having a cylindrical tool shank (2) which can be clamped with the upper end into a milling machine and which comprises a milling area (3) starting from its other lower end and extending in the direction towards the upper end of the tool shank, which has at least one milling surface (4) situated in the circumference of the roughing milling cutter and extends in a thread, which is provided with roughing teeth with a cutting edge (6) which extend in a wave-shaped fashion in the longitudinal direction of the thread, the cutting edge (6) being chamfered across its entire length and substantially across the entire height of the wave-shaped roughing teeth, **characterized in that** the chamfered area (14) of the cutting edge (6) is provided with a serration of alternately wave crests (15) and wave troughs (16) in its longitudinal direction.

2. The roughing milling cutter according to claim 1, **characterized in that** the period (P) of the serration, i.e. the distance between two successive wave crests (15), is constant.

3. The roughing milling cutter according to claim 2, **characterized in that** the wave crests (15) and wave troughs (16) of the serration are situated in one and the same surface line (17) of the tool shank (2), seen in the longitudinal direction of the roughing milling cutter, in a roughing milling cutter (1) having several (n) milling faces (4) extending in each case in a thread.

4. The roughing milling cutter according to claim 2, **characterized in that** the wave crests (15) and wave troughs (16) of the serration of adjacent milling faces (4) are in each case mutually offset in each case by one nth of the period (P) of the serration in the circumferential direction of the tool shank (2), seen in the longitudinal direction of the roughing milling cutter, in a roughing milling cutter' (1) having several (n) milling faces (4) extending in each case in a thread.

5. The roughing milling cutter according to claim 4, **characterized in that** the offset of the period (P) of the serration of successive milling faces by one nth of the period each takes place in one direction (18).

6. The roughing milling cutter according to any of the preceding claims, **characterized in that** the period (P) of the serration is greater than the period of the wave-shaped roughing teeth (11).

7. The roughing milling cutter according to claim 6, **characterized in that** the period (P) of the serration is at least three times the period of the roughing teeth.

8. The roughing milling cutter according to any of the preceding claims, **characterized in that** the chamfered area (14) of the cutting edge (6) has a width in the range of about one hundredth and/or a few hundredths of the diameter of the roughing milling cutter.

## Revendications

1. Fraise dégrossisseuse (1) comportant une tige d'outil (2) cylindrique, qui peut être montée, sur une extrémité supérieure, dans une machine à fraiser et qui présente une zone de fraisage (3) partant de son autre extrémité inférieure et s'étendant en direction de l'extrémité supérieure de la tige d'outil, qui présente au moins une surface de fraisage (4) située à la périphérie de la fraise dégrossisseuse et évoluant dans un pas de vis, laquelle est pourvue d'une denture dégrossisseuse s'étendant en forme ondulée en direction longitudinale du pas de vis et présentant un tranchant de coupe (6), le tranchant de coupe (6) étant biseauté sur sa longueur totale et sensiblement sur toute la hauteur de la denture dégrossisseuse de forme ondulée, **caractérisée en ce que** la zone biseautée (14) du tranchant de coupe (6) est pourvue, dans sa direction longitudinale, d'un meulage ondulé formé alternativement de sommets (15) et de creux (16).

2. Fraise dégrossisseuse selon la revendication 1, **caractérisée en ce que** la période (P) du meulage ondulé, c'est-à-dire la distance entre deux sommets, (15) est constante.

3. Fraise dégrossisseuse selon la revendication 2, **caractérisée en ce que** dans le cas d'une fraise dégrossisseuse (1) comportant plusieurs (n) surfaces de fraisage (4) évoluant chacune dans un pas de vis, les sommets (15) et les creux (16) du meulage ondulé, vus en direction longitudinale de la fraise dégrossisseuse, sont situés dans une seule et même génératrice (17) de la tige d'outil (2).

4. Fraise dégrossisseuse selon la revendication 2, **caractérisée en ce que** dans le cas d'une fraise dégrossisseuse (1) comportant plusieurs (n) surfaces de fraisage (4) évoluant chacune dans un pas de vis, les sommets (15) et les creux (16) du meulage ondulé de surfaces de fraisage (4) voisines, vus en direction longitudinale de la fraise dégrossisseuse, sont chacun décalés les uns par rapport aux autres d'un nième de la période (P) du meulage ondulé en direction périphérique de la tige d'outil (2).

5. Fraise dégrossisseuse selon la revendication 4, **caractérisée en ce que** le décalage respectif de la période (P) du meulage ondulé de surfaces de fraisage successives est produit de la valeur d'un nième de la période dans une direction (18).

6. Fraise dégrossisseuse selon l'une quelconque des revendications précédentes, **caractérisée en ce que** la période (P) du meulage ondulé est plus grande que la période de la denture dégrossisseuse (11) de forme ondulée.

7. Fraise dégrossisseuse selon la revendication 6, **caractérisée en ce que** la période (P) du meulage ondulé s'élève à au moins le triple de la période de la denture dégrossisseuse.

8. Fraise dégrossisseuse selon l'une quelconque des revendications précédentes **caractérisée en ce que** la zone biseautée (14) de l'arête de coupe (6) présente une largeur dans la plage d'approximativement un centième ou de quelques centièmes du diamètre de la fraise dégrossisseuse.
